# EUROPÄISCHE PATENTSCHRIFT

(11) **EP 3 360 761 B1**
(45) Veröffentlichungstag und Bekanntmachung des Hinweises auf die Patenterteilung: **10.07.2019**
(21) Anmeldenummer: 17155394.4
(22) Anmeldetag: 09.02.2017
(51) Int. Cl.: B62D 25/02

(54) **SCHWELLER FÜR EIN KRAFTFAHRZEUG**
SIDE SILL FOR A MOTOR VEHICLE
LONGERON DE BAS DE CAISSE D'UN VÉHICULE AUTOMOBILE

(43) Veröffentlichungstag der Anmeldung: 15.08.2018
(73) Patentinhaber: MAGNA STEYR Fahrzeugtechnik AG & Co KG, 8041 Graz (AT)
(72) Erfinder: HOFER, Bernhard, 8053 Graz (AT)
(74) Vertreter: Zangger, Bernd

(56) Entgegenhaltungen:
- EP-A2- 1 238 895
- DE-A1-102005 038 463
- DE-A1-102014 206 002
- DE-T2- 60 219 275

## Beschreibung

### Gebiet der Erfindung

Die vorliegende Erfindung betrifft einen Schweller für ein Kraftfahrzeug und ein Verfahren zur Herstellung des Schwellers, sowie ein Verfahren zur Herstellung eines Kraftfahrzeuges umfassend einen solchen Schweller.

### Stand der Technik

Es ist bekannt einen Schweller (DE102014206002A1) für ein Kraftfahrzeug, also ein Karosseriebauteil das an beiden Seiten im Bodenbereich eines Kraftfahrzeuges angeordnet ist, durch ein sich in einer Längsrichtung erstreckendes Schwellerprofil auszubilden. Als "Schwellerprofil" wird dabei ein Profil, typischerweise ein Hohlprofil, bezeichnet, das den Hauptteil des Schwellers bildet. Das Schwellerprofil kann einstückig ein Hohlprofil ausbilden oder auch aus beispielsweise zwei zusammengesetzten Profilteilen aufgebaut sein, die zusammen ein Hohlprofil ausbilden.

In jüngerer Zeit werden auch Schwellerprofile aus Aluminium für die Herstellung einer Karosserie in Leichtbauweise verwendet. Derartige Schwellerprofile sind zwar leicht, weisen aber eine geringe Dehnbarkeit auf und brechen insbesondere bei einem seitlichen Aufprall auf den Schweller leichter als beispielsweise Schwellerprofile aus Stahl.

Daher wurde bereits versucht die Vorteile der verschiedenen Materialien zu kombinieren, indem ein Schweller sowohl Bauteile aus Aluminium als auch Bauteile aus Stahl aufweist.

So offenbart beispielsweise die DE 10 2014 200 598 B3 ein Karosseriebauteil für ein Kraftfahrzeug, insbesondere einen seitlicher Schweller, das ein geschossenes Hohlprofil aufweist und zumindest aus zwei Blechschalen aufgebaut ist, die an deren abgewinkelten Randflanschen durch Schweißverbindungen fest miteinander verbunden und mit zumindest einer, in dem Hohlprofil angeordneten Verstärkungseinlage zur Aussteifung des Bauteils in Quer- und/oder Hochrichtung (y, z) versehen sind, wobei die Verstärkungseinlage an gegenüberliegenden Wandabschnitten zumindest einer oder beider Blechschalen spielfrei in Anlage ist und mittels Punktschweißverbindungen mit diesen verschweißt ist, wobei die Verstärkungseinlage durch zwei kreuzförmig verbundene Doppel-T-Profile gebildet ist, die mit jeweils gegenüberliegenden Wandabschnitten der Blechschalen in Quer- und Hochrichtung (y, z) verschweißt ist.

Die DE 10 2013 004 852 A1 lehrt einen Schweller für eine Fahrzeugkarosserie, mit einem länglichen, als Hohlprofil ausgebildeten Verstärkungsbauteil aus Metall, vorzugsweise aus Stahl, und/oder aus Kunststoff, vorzugsweise aus faserverstärktem Kunststoff, wobei das Verstärkungsbauteil aus einer Gruppe von mindestens zwei, vorzugsweise mindestens drei Einzelprofilen aufgebaut ist. Die Einzelprofile sind dabei zu einem im Wesentlichen rechteckigen Hohlprofil aneinandergefügt.

### Zusammenfassung der Erfindung

Es ist eine Aufgabe der Erfindung, einen Schweller für ein Kraftfahrzeug anzugeben, der leicht ist und gute Crasheigenschaften aufweist. Insbesondere soll die bei einem sogenannten "Pfahlaufprall" auftretende Energie durch den Schweller abgebaut werden, ohne dass es zu einem Bruch kommt. Eine Aufgabe der Erfindung ist es auch, ein Verfahren zur Herstellung eines solchen Schwellers anzugeben und ein Verfahren zur Herstellung eines Kraftfahrzeuges umfassend einen solchen Schweller.

Die Lösung der Aufgabe erfolgt durch einen Schweller für ein Kraftfahrzeug, umfassend ein sich in einer Längsrichtung erstreckendes Schwellerprofil, sowie ein sich in der Längsrichtung erstreckendes Verstärkungsteil, wobei das Schwellerprofil zumindest eine Längsausnehmung aufweist, wobei das Verstärkungsteil zumindest eine Längslasche aufweist, wobei die Längslasche in der Längsausnehmung befestigt ist.

Zum Erreichen von ausreichend guten Festigkeitseigenschaften bei einem Unfall, insbesondere bei einem "Pfahlaufprall", wird an einem Schwellerprofil, das aus einem Leichtmetall wie Aluminium bestehen kann, eine Verstärkung, bevorzugt aus einem festeren Material wie etwa Stahl, montiert. Das Verstärkungsteil wird dabei aber, zumindest primär, nicht mittels Punktverbindungen und nicht mittels Verschweißung am Schwellerprofil befestigt, da die unterschiedlichen Materialien typischerweise unterschiedliche Wärmeausdehnungen aufweisen und es beim Verscheißen zu einem Verzug der Bauteile kommen kann.

Erfindungsgemäß werden eine sich in Längsrichtung erstreckende Ausnehmung und eine dazu passende, sich in der selben Längsrichtung erstreckende Lasche genutzt, um durch Einstecken der Lasche des Verstärkungsteils in die Längsausnehmung des Schwellerprofils eine sichere Verbindung zwischen den Bauteilen herzustellen, die einen Längenausgleich bei unterschiedlicher Wärmeausdehnung der Bauteile aufnehmen kann. Eine derartige Verbindung der beiden langbauenden Bauteile ist auch weniger empfindlich in Bezug auf Toleranzen während der Herstellung der Bauteile und ermöglicht eine kürzere Bauzeit. Zudem können die beiden Bauteile separat hergestellt und lackiert und erst anschließend miteinander verbunden werden, wodurch die Montage weiter vereinfacht wird.

Das Schwellerprofil kann insbesondere ein Strangpressprofil sein, alternativ könnte das Schwellerprofil auch ein Gussteil sein.

Die Längsausnehmung kann insbesondere eine Längsnut sein, die somit zwei sich gegenüberliegende Begrenzungsflächen aufweist.

Die Längslasche kann in der Längsausnehmung mittels Klebstoff befestigt sein, insbesondere an beiden Seiten der Längslasche, die jeweils mit einer der Begrenzungsflächen der Längsnut verklebt sein können. Als Klebstoff wird vorzugsweise ein elastischer Montagekleber verwendet, insbesondere ein elastischer Zwei-Komponenten-Montagekleber, um eine unterschiedliche Wärmeausdehnung der Materialien bestmöglich aufzunehmen.

Das Verstärkungsteil besteht bevorzugt aus einem anderen Material als das Schwellerprofil, insbesondere aus einem festeren Material. Bevorzugt besteht das Schwellerprofil aus Leichtmetall oder einer Leichtmetalllegierung, insbesondere aus Aluminium, und das Verstärkungsteil besteht vorzugsweise aus einem Schwermetall oder einer Schwermetalllegierung, insbesondere aus Stahl. Denkbar ist auch, dass das Verstärkungsteil aus einem Leichtmetall bzw. einer Leichtmetalllegierung besteht, wobei sich dieses/diese vorzugsweise von der Art des Leichtmetalles bzw. Leichtmetalllegierung des Schwellerprofiles unterscheidet.

Das Schwellerprofil weist vorzugsweise im Inneren eine Rippenstruktur auf. Das Verstärkungsteil ist bevorzugt von außen in die Längsausnehmung des Strangpressteils eingehängt.

Die Längslasche ist bevorzugt an einem Ende des Verstärkungsteils ausgebildet.

Vorzugsweise ist das Verstärkungsteil im Wesentlichen ein Profil mit U-förmigem Querschnitt, sodass an einem Ende des Querschnitts des Verstärkungsteils die Längslasche ausgebildet ist und am gegenüberliegenden zweiten Ende des Querschnitts des Verstärkungsteils eine weitere Längslasche ausgebildet ist, wobei die Längslasche in der Längsausnehmung befestigt ist und die weitere Längslasche in einer weiteren Längsausnehmung befestigt ist. Das Verstärkungsteil weist somit zwei Längslaschen auf, das Schwellerprofil zwei Längsaufnahmen, insbesondere Längsnuten. Es können jedoch auch mehr Längslaschen und mehr Längsaufnahmen vorgesehen sein.

Das Verstärkungsteil kann im Wesentlichen ein Kantprofil sein, insbesondere ein Winkelblech, also beispielsweise ein einfaches Stahlblech mit einer abgewinkelten Längslasche, oder auch ein Rollformteil.

Vorteilhaft an dieser Anordnung ist, dass das Verstärkungsteil leicht an unterschiedliche Fahrzeugmodelle bzw. Derivate, die auf der gleichen Plattform aufgebaut sind, angepasst werden kann. Das Verstärkungsteil kann hierbei den zwischen Schwellerprofil und einer Karosserie-Außenhaut befindlichen Bauraum bestmöglich ausnutzen. Ferner ist es auf diese Weise möglich, die Crasheigenschaften des Schwellers zu optimieren und vor allem an das jeweilige Fahrzeugmodell bzw. Derivat anzupassen. Die Optimierung kann insbesondere durch entsprechende Materialwahl und Form des Verstärkungsteiles erfolgen, beispielsweise durch Ausgestaltung des Verstärkungsteils mit Rippen und/oder Stegen.

Ferner besteht mittels Formgebung des Verstärkungsteiles die Möglichkeit einer optimalen Anpassung des Schwellers an die Außenkontur des jeweiligen Fahrzeugmodelles bzw. Derivates.

Das Verstärkungsteil kann dazu ebenfalls als Strangpressprofil oder als Gussteil ausgeführt sein.
Eine Karosserie-Außenbeplankung kann am Verstärkungsteil befestigt sein, insbesondere an einer Außenseite des Verstärkungsteils mit diesem flächig verklebt.

Ein erfindungsgemäßes Verfahren zur Herstellung eines Schwellers, wie zuvor beschrieben, weist die Verfahrensschritte auf, dass Klebstoff in die Längsausnehmung des Schwellerprofils eingebracht wird und danach die Längslasche des Verstärkungsteils in die Längsausnehmung des Schwellerprofils eingebracht wird.

Vorzugsweise werden zuerst das Schwellerprofil und das Verstärkungsteil getrennt voneinander lackiert, anschließend Klebstoff in die Längsausnehmung des Schwellerprofils eingebracht und danach die Längslasche des Verstärkungsteils in die Längsausnehmung des Schwellerprofils eingebracht.

Insbesondere bei Verwendung eines Schwellerprofils und Verstärkungsteils aus Leichtmetall aber aus unterschiedlichen Legierungen, beispielsweise aus unterschiedlichen Aluminiumlegierungen, wird bevorzugt auf eine Lackierung im engeren Sinn verzichtet. Vorzugsweise werden Schwellerprofil und/oder Verstärkungsteil mit einer Oxydschicht beschichtet. Anschließend werden die Bauteile wie beschrieben verklebt.

Weist das Verstärkungsteil mehrere Längslaschen auf und das Schwellerprofil mehrere Längsausnehmungen, so werden bevorzugt alle Längslaschen gleichzeitig in die bereits mit Klebstoff befüllten Längsausnehmungen des Schwellerprofils eingebracht.

Durch das Lackieren, insbesondere Tauchlackieren und/oder Decklackieren, kann eine bessere Haftung des Klebstoffes an den Bauteilen vorbereitet werden, zudem kann durch das Lackieren ein Korrosionsschutz zwischen Schwellerprofil und Verstärkungsteil verbessert werden.

Nach dem Einbringen des Klebstoffes in die Längsausnehmung oder Längsausnehmungen, kann die Längslasche oder die Längslaschen des Verstärkungsteils in die klebstoffgefüllten Ausnehmungen eingetaucht werden. Je nach Auswahl des Klebstoffes, kann eine Fixierung der Bauteile bis zur Aushärtung des Klebstoffes entfallen und auf weitere Verbindungsmittel, wie Verschraubungen oder Vernietungen verzichtet werden.

Ein Verfahren zur Herstellung eines Kraftfahrzeuges umfassend einen Schweller wie oben beschrieben, kann vorsehen, dass zuerst das bereits an einer Karosserie des Kraftfahrzeuges befestigte Schwellerprofil gemeinsam mit der Karosserie einem Lackprozess, insbesondere Tauchlackieren und/oder Decklackieren, unterzogen wird, anschließend Klebstoff in die Längsausnehmung des Schwellerprofils eingebracht wird und danach die Längslasche des Verstärkungsteils in die Längsausnehmung des Schwellerprofils eingebracht wird. Dabei kann das Verstärkungsteil hierbei lackiert sein oder auch nicht lackiert sein.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines erfindungsgemäßen Schwellers, wobei das Verstärkungsteil vom Schwellerprofil getrennt ist.
- Fig. 2: ist eine Schnittansicht des erfindungsgemäßen Schwellers gemäß Fig. 1, wobei das Verstärkungsteil mit dem Schwellerprofil verbunden ist.

### Detaillierte Beschreibung der Erfindung

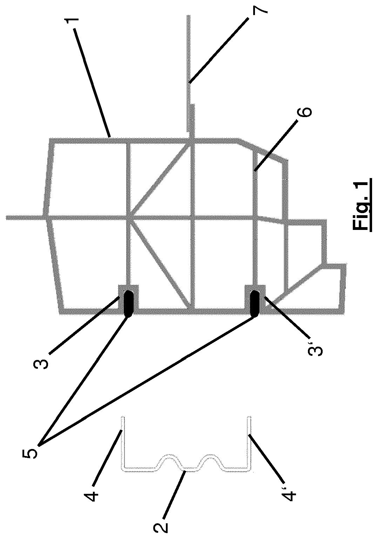

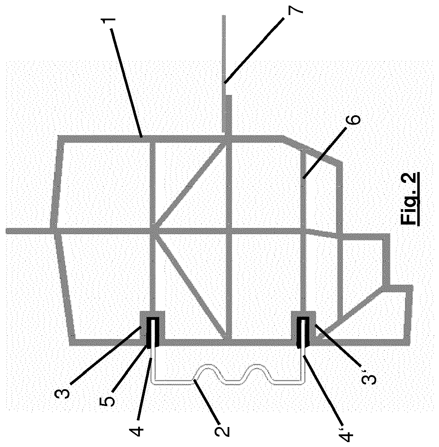

In den Fig. 1 und 2 ist ein erfindungsgemäßer Schweller für ein Kraftfahrzeug dargestellt. Dabei ist in Fig. 1 zur besseren Unterscheidung der Bauteile das Verstärkungsteil 2 nicht mit dem Schwellerprofil 1 verbunden, in Fig. 2 der übliche Zustand des Schwellers dargestellt, wobei Verstärkungsteil 2 und Schwellerprofil 1 verbunden sind.

Das Schwellerprofil 1 ist ein sich in einer Längsrichtung des Fahrzeuges erstreckendes Aluminium-Strangpressteil, mit einer Rippenstruktur 6 im Inneren des Hohlkörpers, welche Seitenwände des Schwellerprofils miteinander verbindet und somit abstützt.

Der Schweller, nämlich das Schwellerprofil 1, ist mit einem Bodenblech 7 an einer zum Inneren des Fahrzeuges, also zu einer Fahrzeuglängsmittellinie, weisenden Seite verbunden.

An der gegenüberliegenden, nach außen weisenden Seite des Schwellers, ist das sich in der Längsrichtung erstreckende Verstärkungsteil 2 aus Stahl mit dem Schwellerprofil 1 verbunden.

Das Schwellerprofil 1 weist an dieser Außenseite des Schwellers zwei Längsausnehmungen 3 und 3' auf, nämlich zwei in Längsrichtung des Fahrzeuges verlaufende, horizontal ausgerichtete Längsnuten.

Das Verstärkungsteil 2 ist ein Profil mit im Wesentlichen U-förmigem Querschnitt, sodass an einem Ende des Querschnitts des Verstärkungsteils 2 die Längslasche 4 ausgebildet ist und am gegenüberliegenden zweiten Ende des Querschnitts des Verstärkungsteils 2 eine weitere Längslasche 4' ausgebildet ist. Die beiden Längslaschen 4, 4' sind über einen vertikal ausgerichteten Mittelteil miteinander verbunden, der teilweise gewölbt ausgeführt ist.

Sowohl in der Längsausnehmung 3 als auch in der weiteren Längsausnehmung 3' ist ein Zweikomponenten-Montagekleber mit elastischen Eigenschaften als Klebstoff 5 eingebracht.

Die Längslasche 4 ist in der Längsausnehmung 3 verklebt und die weitere Längslasche 4' in einer weiteren Längsausnehmung 3' verklebt.

### Bezugszeichenliste

- 1: Schwellerprofil
- 2: Verstärkungsteil
- 3: Längsausnehmung
- 3': weitere Längsausnehmung
- 4: Längslasche
- 4': weitere Längslasche
- 5: Klebstoff
- 6: Rippenstruktur
- 7: Bodenblech

## Patentansprüche

1. Schweller für ein Kraftfahrzeug, umfassend ein sich in einer Längsrichtung erstreckendes Schwellerprofil (1), sowie ein sich in der Längsrichtung erstreckendes Verstärkungsteil (2),
**dadurch gekennzeichnet, dass** das Schwellerprofil (1) zumindest eine Längsausnehmung (3) aufweist, wobei das Verstärkungsteil (2) zumindest eine Längslasche (4) aufweist, wobei die Längslasche (4) in der Längsausnehmung (3) befestigt ist.

2. Schweller nach Anspruch 1,
**dadurch gekennzeichnet, dass** die Längsausnehmung (3) eine Längsnut ist.

3. Schweller nach zumindest einem der vorhergehenden Ansprüche,
**dadurch gekennzeichnet, dass** die Längslasche (4) in der Längsausnehmung (3) mittels Klebstoff (5) befestigt ist, insbesondere an beiden Seiten der Längslasche (4).

4. Schweller nach zumindest einem der vorhergehenden Ansprüche,
**dadurch gekennzeichnet, dass** das Verstärkungsteil (2) aus einem anderen Material besteht als das Schwellerprofil (1), insbesondere aus einem festeren Material.

5. Schweller nach zumindest einem der vorhergehenden Ansprüche,
**dadurch gekennzeichnet, dass** das Schwellerprofil (1) im Inneren eine Rippenstruktur (6) aufweist.

6. Schweller nach zumindest einem der vorhergehenden Ansprüche,
**dadurch gekennzeichnet, dass** die Längslasche (4) an einem Ende des Verstärkungsteils (2) ausgebildet ist.

7. Schweller nach zumindest einem der vorhergehenden Ansprüche,
**dadurch gekennzeichnet, dass** das Verstärkungsteil (2) im Wesentlichen ein Profil mit U-förmigem Querschnitt ist, sodass an einem Ende des Querschnitts des Verstärkungsteils (2) die Längslasche (4) ausgebildet ist und am gegenüberliegenden zweiten Ende des Querschnitts des Verstärkungsteils (2) eine weitere Längslasche (4') ausgebildet ist, wobei die Längslasche (4) in der Längsausnehmung (3) befestigt ist und die weitere Längslasche (4') in einer weiteren Längsausnehmung (3') befestigt ist.

8. Schweller nach zumindest einem der vorhergehenden Ansprüche,
**dadurch gekennzeichnet, dass** das Verstärkungsteil (2) im Wesentlichen ein Kantprofil ist, insbesondere ein Winkelblech, oder ein Rollformteil.

9. Schweller nach zumindest einem der vorhergehenden Ansprüche,
**dadurch gekennzeichnet, dass** eine Karosserie-Außenbeplankung am Verstärkungsteil (2) befestigt ist.

10. Verfahren zur Herstellung eines Schwellers nach zumindest einem der vorhergehenden Ansprüche, wobei Klebstoff (5) in die Längsausnehmung (3) des Schwellerprofils (1) eingebracht wird und danach die Längslasche (4) des Verstärkungsteils (2) in die Längsausnehmung (3) des Schwellerprofils (1) eingebracht wird.

11. Verfahren nach Anspruch 10, wobei zuerst das Schwellerprofil (1) und das Verstärkungsteil (2) getrennt voneinander lackiert werden, anschließend Klebstoff (5) in die Längsausnehmung (3) des Schwellerprofils (1) eingebracht wird und danach die Längslasche (4) des Verstärkungsteils (2) in die Längsausnehmung (3) des Schwellerprofils (1) eingebracht wird.

12. Verfahren zur Herstellung eines Kraftfahrzeuges umfassend einen Schweller nach zumindest einem der Ansprüche 1 bis 9, wobei zuerst das bereits an einer Karosserie des Kraftfahrzeuges befestigte Schwellerprofil (1) gemeinsam mit der Karosserie einem Lackprozess, insbesondere Tauchlackieren und/oder Decklackieren, unterzogen wird, anschließend Klebstoff (5) in die Längsausnehmung (3) des Schwellerprofils (1) eingebracht wird und danach die Längslasche (4) des Verstärkungsteils (2) in die Längsausnehmung (3) des Schwellerprofils (1) eingebracht wird.

## Claims

1. Sill for a motor vehicle, comprising a sill profile (1) extending in a longitudinal direction, and a reinforcing piece (2) extending in the longitudinal direction,
**characterized in that** the sill profile (1) has at least one longitudinal recess (3), wherein the reinforcing piece (2) has at least one longitudinal tab (4), wherein the longitudinal tab (4) is fixed in the longitudinal recess (3).

2. Sill according to claim 1,
**characterized in that** the longitudinal recess (3) is a longitudinal groove.

3. Sill according to at least one of the preceding claims,
**characterized in that** the longitudinal tab (4) is fixed in the longitudinal recess (3) by means of adhesive (5), in particular on both sides of the longitudinal tab (4).

4. Sill according to at least one of the preceding claims,
**characterized in that** the reinforcing piece (2) consists of a different material from the sill profile (1), in particular a stronger material.

5. Sill according to at least one of the preceding claims,
**characterized in that** the sill profile (1) has a rib structure (6) on the inside.

6. Sill according to at least one of the preceding claims,
**characterized in that** the longitudinal tab (4) is formed at one end of the reinforcing piece (2).

7. Sill according to at least one of the preceding claims,
**characterized in that** the reinforcing piece (2) is substantially a profile with U-shaped cross-section, so that the longitudinal tab (4) is formed at one end of the cross-section of the reinforcing piece (2) and a further longitudinal tab (4') is formed at the opposite second end of the cross-section of the reinforcing piece (2), wherein the longitudinal tab (4) is fixed in the longitudinal recess (3) and the further longitudinal tab (4') is fixed in a further longitudinal recess (3').

8. Sill according to at least one of the preceding claims,
**characterized in that** the reinforcing piece (2) is substantially an angular profile, in particular an angled plate, or a rolled part.

9. Sill according to at least one of the preceding claims,
**characterized in that** outer body panelling is attached to the reinforcing piece (2).

10. Method for production of a sill according to at least one of the preceding claims, wherein adhesive (5) is introduced into the longitudinal recess (3) of the sill profile (1) and thereafter the longitudinal tab (4) of the reinforcing piece (2) is inserted in the longitudinal recess (3) of the sill profile (1).

11. Method according to claim 10, wherein firstly the sill profile (1) and the reinforcing piece (2) are painted separately from each other, then adhesive (5) is introduced into the longitudinal recess (3) of the sill profile (1) and thereafter the longitudinal tab (4) of the reinforcing piece (2) is inserted in the longitudinal recess (3) of the sill profile (1).

12. Method for production of a motor vehicle comprising a sill according to at least one of claims 1 to 9, wherein firstly the sill profile (1), already attached to a body of the motor vehicle, together with the body, is subject to a painting process, in particular dip-coating and/or cover-coating, then adhesive (5) is introduced into the longitudinal recess (3) of the sill profile (1) and thereafter the longitudinal tab (4) of the reinforcing piece (2) is inserted in the longitudinal recess (3) of the sill profile (1).

## Revendications

1. Longeron de bas de caisse d'un véhicule automobile, comprenant un profilé de longeron de bas de caisse (1) s'étendant dans une direction longitudinale, ainsi qu'une partie de renforcement (2) s'étendant dans la direction longitudinale,
**caractérisé en ce que** le profilé de longeron de bas de caisse (1) présente au moins un évidement longitudinal (3), la partie de renforcement (2) présentant au moins une patte longitudinale (4), la patte longitudinale (4) étant fixée dans l'évidement longitudinal (3).

2. Longeron de bas de caisse selon la revendication 1,
**caractérisé en ce que** l'évidement longitudinal (3) est une rainure longitudinale.

3. Longeron de bas de caisse selon au moins l'une quelconque des revendications précédentes,
**caractérisé en ce que** la patte longitudinale (4) est fixée dans l'évidement longitudinal (3) au moyen d'un adhésif (5), en particulier au niveau des deux côtés de la patte longitudinale (4).

4. Longeron de bas de caisse selon au moins l'une quelconque des revendications précédentes,
**caractérisé en ce que** la partie de renforcement (2) se compose d'un matériau différent de celui du profilé de longeron de bas de caisse (1), en particulier d'un matériau plus solide.

5. Longeron de bas de caisse selon au moins l'une quelconque des revendications précédentes,
**caractérisé en ce que** le profilé de longeron de bas de caisse (1) présente une structure nervurée (6) à l'intérieur.

6. Longeron de bas de caisse selon au moins l'une quelconque des revendications précédentes,
**caractérisé en ce que** la patte longitudinale (4) est réalisée à une extrémité de la partie de renforcement (2).

7. Longeron de bas de caisse selon au moins l'une quelconque des revendications précédentes,
**caractérisé en ce que** la partie de renforcement (2) est essentiellement un profilé ayant une section transversale en forme de U, de telle sorte que la patte longitudinale (4) est réalisée à une extrémité de la section transversale de la partie de renforcement (2) et une patte longitudinale supplémentaire (4') est réalisée à la deuxième extrémité, opposée, de la section transversale de la partie de renforcement (2), la patte longitudinale (4) étant fixée dans l'évidement longitudinal (3) et la patte longitudinale supplémentaire (4') étant fixée dans un évidement longitudinal supplémentaire (3').

8. Longeron de bas de caisse selon au moins l'une quelconque des revendications précédentes,
**caractérisé en ce que** la partie de renforcement (2) est essentiellement un profilé en arête, en particulier une tôle coudée, ou une pièce façonnée par roulage.

9. Longeron de bas de caisse selon au moins l'une quelconque des revendications précédentes,
**caractérisé en ce qu'**un panneau extérieur de carrosserie est fixé à la partie de renforcement (2).

10. Procédé de fabrication d'un longeron de bas de caisse selon au moins l'une quelconque des revendications précédentes, de l'adhésif (5) étant introduit dans l'évidement longitudinal (3) du profilé de longeron de bas de caisse (1) et la patte longitudinale (4) de la partie de renforcement (2) étant ensuite introduite dans l'évidement longitudinal (3) du profilé de longeron de bas de caisse (1).

11. Procédé selon la revendication 10, dans lequel le profilé de longeron de bas de caisse (1) et la partie de renforcement (2) sont laqués séparément l'un de l'autre, puis de l'adhésif (5) est introduit dans l'évidement longitudinal (3) du profilé de longeron de bas de caisse (1) puis la patte longitudinale (4) de la partie de renforcement (2) est introduite dans l'évidement longitudinal (3) du profilé de longeron de bas de caisse (1).

12. Procédé de fabrication d'un véhicule automobile comprenant un longeron de bas de caisse selon au moins l'une quelconque des revendications 1 à 9, dans lequel le profilé de longeron de bas de caisse (1) déjà fixé à une carrosserie du véhicule automobile est d'abord soumis, conjointement avec la carrosserie, à un processus de laquage, en particulier de laquage par immersion et/ou de laquage de finition, puis de l'adhésif (5) est introduit dans l'évidement longitudinal (3) du profilé de longeron de bas de caisse (1) puis la patte longitudinale (4) de la partie de renforcement (2) est introduite dans l'évidement longitudinal (3) du profilé de longeron de bas de caisse (1).
